Europäisches Patentamt

European Patent Office

Office européen des brevets

(19)

(11) Numéro de publication : **0 319 368 B1**

# (12) FASCICULE DE BREVET EUROPEEN

(45) Date de publication du fascicule du brevet :
02.01.92 Bulletin 92/01

(51) Int. Cl.⁵ : **B01J 8/12**, C10G 49/14

(21) Numéro de dépôt : **88402911.7**

(22) Date de dépôt : **18.11.88**

(54) **Appareil pour injecter une charge d'hydrocarbures dans un réacteur.**

(30) Priorité : 30.11.87 FR 8716692
23.06.88 FR 8808576

(43) Date de publication de la demande :
07.06.89 Bulletin 89/23

(45) Mention de la délivrance du brevet :
02.01.92 Bulletin 92/01

(84) Etats contractants désignés :
BE DE GB IT NL

(56) Documents cités :
EP-A- 0 152 335
GB-A- 2 126 495
US-A- 3 414 386
US-A- 4 571 326

(73) Titulaire : **INSTITUT FRANCAIS DU PETROLE**
**4, Avenue de Bois-Préau**
**F-92502 Rueil-Malmaison (FR)**

(72) Inventeur : **Renard, Pierre**
**8, Allée des Romarins**
**F-78860 Saint Nom La Breteche (FR)**
Inventeur : **Simandoux, Jean-Claude**
**1, Avenue Limbourg La Gravière**
**F-69110 Sainte Foy les Lyon (FR)**
Inventeur : **Burzynski Jean-Pierre**
**40, rue du Commandant Charcot**
**F-69005 Lyon (FR)**

Jouve, 18, rue Saint-Denis, 75001 PARIS

## Description

La présente invention concerne un appareil de traitement (ou hydrotraitement) catalytique d'une charge fluide et plus particulièrement de démétallisation, de désulfuration, d'hydrotraitement et de conversion ou d'hydroconversion d'hydrocarbures, en lit fixe ou mobile comme expliqué ci-dessous.

L'invention est notamment applicable aux traitements catalytiques de charges liquides, telles que, par exemple, distillats issus des bruts pétroliers lourds, des résidus de la distillation d'hydrocarbures atmosphérique et sous vide, ces traitements étant effectués généralement en présence d'hydrogène et/ou de mélanges gazeux riches en hydrogène, sur un lit de catalyseur solide, le catalyseur étant utilisé sous forme de particules (catalyseur extrudé, grains de formes diverses, billes etc...).

Lors de tels traitement catalytiques, on constate une désactivation souvent rapide du catalyseur, dûe à la présence de poisons catalytiques, à la formation de coke, au dépôt de certains métaux... etc...

Cette désactivation nécessite le remplacement fréquent de tout ou partie du lit catalytique.

Dans l'appareil de l'invention, le soutirage du catalyseur hors du réacteur est effectué progressivement. Le terme "progressivement" signifie que le catalyseur peut être soutiré :

— soit périodiquement, par exemple avec une fréquence de 1/10 à 10 jours ou davantage, en ne soutirant à la fois qu'une fraction, par exemple 0,5 à 15% de la quantité totale du catalyseur. On peut, selon les besoins, soutirer davantage de catalyseur et par exemple soutirer jusqu'à 100% de la quantité totale de catalyseur, c'est à dire la totalité du catalyseur.

La fréquence de soutirage du catalyseur peut être beaucoup plus rapide, (de l'ordre de la minute ou de la seconde par exemple), la quantité soutirée étant réduite en proportion
— soit en continu.

Le catalyseur frais est introduit à la partie supérieure du réacteur ; le système d'injection de la charge et de l'hydrogène ensemble sous la forme d'une fluide mixte qui chemine de bas en haut du réacteur, fait l'objet de la présente invention.

Les dispositifs selon l'invention conviennent ainsi pour l'injection d'une charge devant être mise en contact avec des particules catalytiques de réacteurs de craquage, d'hydrocraquage, d'hydroréformage, de fabrication d'hydrocarbures aromatiques, d'isomérisation d'hydrocarbures paraffiniques, naphténiques ou aromatiques, les réactions diverses d'hydrogénation, d'hydrotraitement, de déshydrogénation, d'alkylation, de transalkylation, d'hydrodécyclisation, d'hydrodéalkylation, les traitements, d'hydroviscoréduction, etc... réacteurs où la charge et/ou les gaz qui y sont injectés, cheminent de bas en haut.

La charge fluide, qui est généralement un mélange d'un liquide et d'un gaz est introduite dans le réacteur ou l'enceinte renfermant des particules catalytiques, par des organes de distribution situés à la partie inférieure du réacteur ou de l'enceinte et circule à contre-courant du catalyseur, de bas en haut ("up-flow"), avant d'être évacuée, après son traitement, à la partie supérieure du réacteur (ou de l'enceinte que l'on désigne arbitrairement "réacteur" dans la suite de la présente description). L'écoulement du catalyseur, par gravité, assure une descente régulière du lit catalytique, tandis que la circulation ascendante de la charge fluide permet en particulier un réglage facile du temps de séjour et assure un détassement contrôlé du lit.

Par ailleurs, la circulation à contre-courant de la charge et du catalyseur permet d'obtenir une conversion catalytique poussée puisque le catalyseur frais introduit au sommet du réacteur traite une charge presque convertie (c'est à dire contenant essentiellement des composés dont la transformation est difficile), tandis qu'au fond du réacteur, le catalyseur usé traite une charge fraîche (c'est à dire riche en composés faciles à transformer), ce qui réalise efficacement les premières étapes de la conversion. Il en résulte une utilisation systématique du catalyseur dans le réacteur, un profil thermique du lit catalytique plus régulier que dans une circulation du type co-courant, avec, en particulier, au bas du réacteur, une température plus modérée réduisant les risques de coкéfaction du catalyseur.

On connait par le brevet US-A 3,826,737 un procédé de conversion catalytique en lit mobile. Ce procédé est cependant plus particulièrement adapté à la circulation co-courant du catalyseur et de la charge liquide, cette dernière étant évacuée à la base du réacteur à travers une grille cylindrique disposée à la base d'un cône de décharge du catalyseur et qui soutient le lit catalytique.

Un tel procédé présente l'inconvénient d'un risque d'encrassement de la grille par des grains de catalyseur poussés contre cette grille par la charge liquide évacuée par le fond du réacteur. Il peut alors en résulter une répartition irrégulière des fluides dans le catalyseur, des difficultés d'écoulement du lit catalytique, avec des risques de blocage de certaines zones de ce lit, ainsi qu'un accroissement de l'érosion du catalyseur dû au frottement entre grains bloqués et grains libres du lit catalytique et entre grains de catalyseur libres et la grille d'évacuation de la charge liquide.

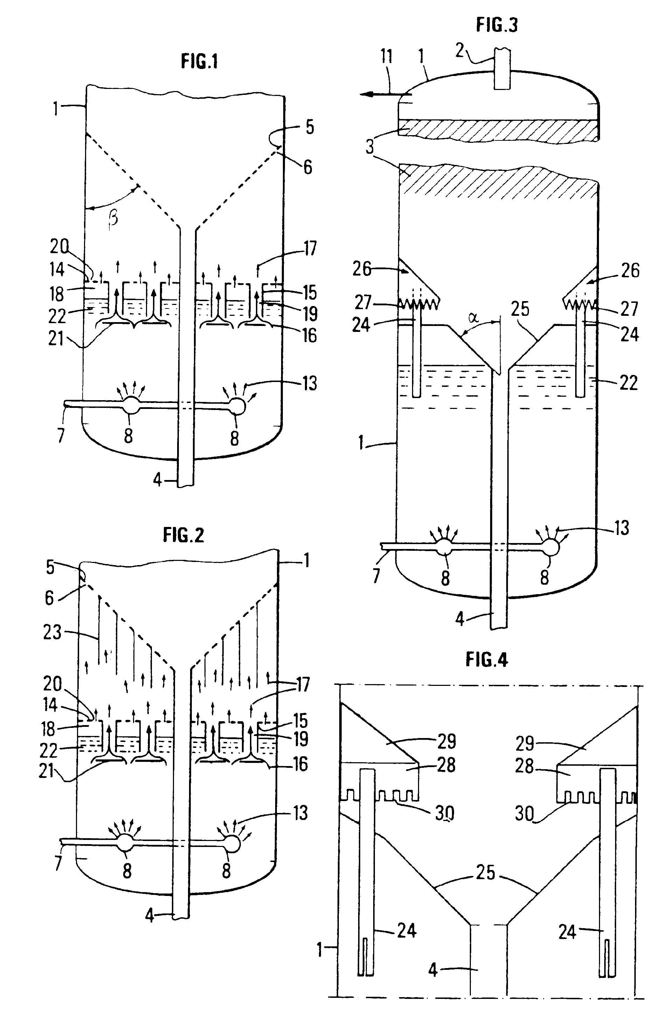

Pour supprimer les inconvénients mentionnés ci-dessus, le brevet US-A 4571326 du demandeur avait proposé deux dispositifs illustrés dans les deux figures 1 et 2, non conformes ici à l'invention. La technique consistait à injecter le liquide et les gaz sous la paroi qui soutient le lit catalytique tout en assurant la distribution gaz-liquide par un dispositif approprié.

Plus particulièrement ce résultat était obtenu par un procédé (avec soutirage progressif des particules solides pulvérulentes d'un espace généralement fermé) pour introduire dans le dit espace une charge fluide constituée d'un liquide et d'un gaz (généralement de l'hydrogène), le dit espace généralement fermé ayant sensiblement la forme d'un volume de révolution allongé et sensiblement vertical, les particules solides étant introduites à la partie supérieure de l'enceinte et soutirées progressivement dans la partie inférieure de l'enceinte après avoir cheminé de haut en bas dans la dite enceinte, tandis que la charge fluide est introduite au moins en partie et généralement en continu dans la partie inférieure de la dite enceinte et en est soutirée dans la partie supérieure après avoir cheminé de bas en haut dans la dite enceinte, procédé dans lequel les particules solides sont soutirées progressivement par l'extrémité inférieure d'au moins une zone évasée ayant une forme dépendant de la géométrie du réacteur et en général la forme d'un cône renversé ou d'un pyramide renversée, c'est à dire d'un cône ou d'une pyramide dont le sommet est tourné vers le bas, sommet dans lequel est percée une ouverture de taille convenable pour l'évacuation des particules solides, la paroi de la dite zone évasée étant sensiblement et régulièrement discontinue c'est à dire parsemée d'au moins plusieurs ouvertures régulièrement espacées ayant chacune une taille suffisamment petite pour empêcher les particules solides de passer au travers de la dite paroi mais suffisamment grande pour permettre le passage à travers ces ouvertures d'un courant ascendant de la charge fluide, le procédé étant caractérisé en ce que la charge fluide était injectée dans la partie inférieure de la dite enceinte par au moins une zone de distribution de forme particulière et située en dessous de la dite paroi.

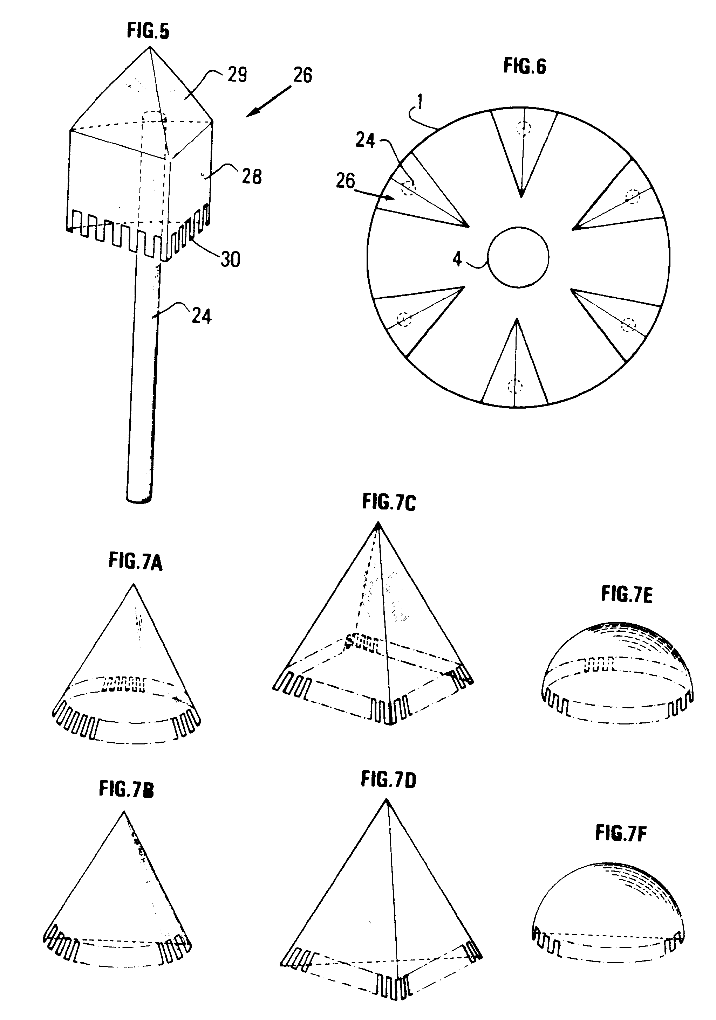

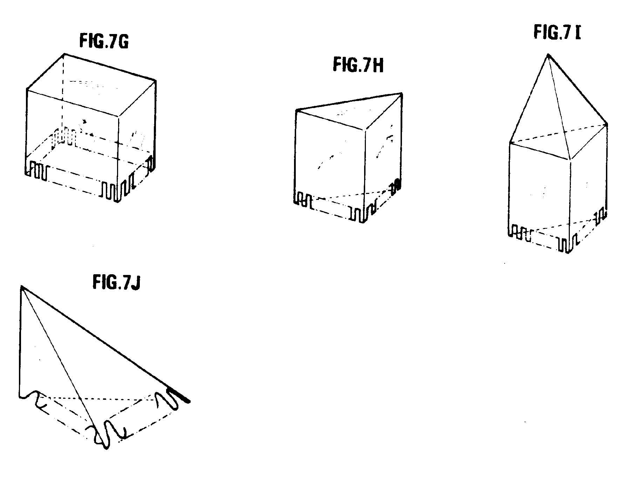

La technique du premier dispositif, illustré par la figure 1, consistait à disposer, dans le réacteur (1), (les numéros de référence sur les figures 1 et 2, non conformes, à l'invention, sont pour plus de compréhension, ceux donnés dans les figures 6 et 7 du brevet US 4571326) entre la grille (5), qui supporte le lit catalytique (soutirage du catalyseur par le conduit (4) et les rampes telles que (7), des zones de distribution de la charge schématisées par les disques (8), une grille supplémentaire (14) dont les perforations (20) sont suffisamment petites pour ne pas laisser passer la majeure partie de la phase liquide du fluide (introduit par les zones de distribution (8), ne laissant passer ainsi que la majeure partie de la phase gazeuse du fluide. Des parois ou des barrières continues (15) (c'est à dire non perforées ou non ajourées) et sensiblement verticales, sous forme de cheminées par exemple, sont disposées, d'un façon généralement régulière sous cette grille (14) en prenant appui sur cette grille (et dont les extrémités inférieures sont situées suffisamment bas dans le réacteur, généralement à un niveau supérieur à celui des zones de distribution (8)) et délimitent ainsi un compartiment (18) et des cheminées (19) : la fraction gazeuse du fluide atteint en majeure partie (flèches (17), la grille (5) à travers le compartiment (18) et les orifices (20), après avoir traversé des zones (22) d'accumulation et de séparation d'une phase liquide et d'une phase gazeuse. Des plateaux ou chicanes (21) sont disposés sous les extrémités inférieures des cheminées (19) (et au-dessus du niveau des boîtes de distribution) de façon à ce que le fluide mixte injecté par les zones de distribution (8) et dont le trajet est matérialisé par les flèches (13), s'accumule dans les compartiments (18) en créant des amas liquides et gazeux (22), la majeure partie du liquide s'engouffrant à travers les cheminées (19) (chemin matérialisé par les flèches (16)). Le dispositif décrit ci-dessus fait donc office de mixeur et de dispersion de la charge fluide.

Les dispositifs de la figure 1 ont pu être encore améliorés dans ce brevet US 4571326. On avait en effet remarqué que les gaz, dont le trajet est matérialisé par les flèches (17), ont tendance à se diriger et à s'accumuler dans les angles bêta délimités par les parois de l'entonnoir ou des entonnoirs (5) et la paroi du réacteur (1). Pour éviter la migration du gaz sous la partie supérieure de l'entonnoir et améliorer ainsi la répartition du gaz et du liquide dans toute la section du lit, on fait cheminer la phase gazeuse (en provenance des orifices de la partie supérieure des dits espaces) à travers une pluralité de zones allongées non communicantes parallèles et sensiblement verticales ou obliques ou en partie verticales et en parties obliques, qui ainsi obligent les particules gazeuses à emprunter un cheminement contrôlé sous l'entonnoir ou sous les entonnoirs. La figure 2 illustre ce perfectionnement : on y retrouve tous les accessoires de la figure 1 et en outre, on y a représenté une pluralité de zones allongées verticales séparées par des barrières verticales (23). Sur la partie droite de la figure 1, les extrémités inférieures de ces barrières sont toutes au même niveau ; ces extrémités sont à des niveaux différents sur la partie gauche de la figure 1. La longueur des barrières et leur niveau dépend essentiellement de la géométrie des zones de distribution.

En vue d'améliorer davantage la dispersion du fluide dans le lit catalytique et d'obtenir toujours une dispersion régulière dans ce lit catalytique avec de grandes fourchettes de débit, la présente invention propose un nouveau dispositif d'introduction conjointe de la charge et du gaz utilisé (hydrogène), qui débouche non pas sous la grille qui supporte le catalyseur mais dans le lit catalytique lui même. La première conséquence dans l'utilisation de ce dispositif est de pouvoir utiliser pour soutenir le catalyseur non plus une grille (qui souvent peut se boucher) mais une paroi dont la surface est sensiblement continue, c'est à dire sans ouvertures telles que fentes ou perforations suffisamment petites pour ne pas laisser passer les grains ou les particules de catalyseur mais suffisamment grands pour laisser passer une charge ou les gaz. Les seules ouvertures dans cette paroi sont celles qui sont agencées pour laisser passer (outre le conduit d'évacuation du catalyseur) les jambages ou les tubulures du dispositif d'injection ou de distribution de la charge et des gaz.

Dans la présente invention, (voir figure 3) le réacteur (1), comporte à sa partie supérieure des moyens d'introduction progressive de catalyseur frais (neuf ou régénéré) schématisés par le conduit (2) qui déverse les particules de catalyseur pour alimenter un lit de catalyseuer (3) fixe ou mobile.

Le catalyseur s'écoule par gravité dans le réacteur et est évacué progressivement par le conduit (4) à la partie inférieure du réacteur (1), par l'intermédiaire d'au moins un entonnoir de soutirage (25). Ce ou ces entonnoirs, sont en forme de zone évasée ayant la forme d'un cône ou d'un tronc de cône renversé ou d'une pyramide ou d'un tronc de pyramide renversé, c'est à dire d'un cône (ou tronc de cône) ou pyramide (ou tronc de pyramide) dont le sommet est tourné vers le bas ; comme indiqué ci-dessus la paroi ou les parois de ce ou ces entonnoirs sont sensiblement continus et ne comportent outre le passage de la conduite (4) de soutirage du catalyseur, que des ouvertures pour l'agencement des jambes, jambages ou tubulures (24) du dispositif d'injection de la charge décrit plus loin.

L'angle alpha que fait l'axe du cône (ou de l'axe de la pyramide si l'entonnoir a cette forme) avec l'une de génératrices du cône (ou l'une des arêtes de la pyramide) est compris généralement entre 10 et 80°, de préférence entre 20 et 50° ou entre 30 et 40°C.

La charge fluide est donc introduite à la partie inférieure du réacteur 1 par au moins une zone de distribution comprenant par exemple une rampe de distribution (7) (horizontale, oblique ou verticale ou disposée de toute façon adéquate, par exemple verticale dans certains réacteurs industriels) munie d'au moins un embout (8) de forme appropriée, par exemple en étoile, en forme de brise de jet, etc..., en vue de disperser le fluide dans de multiples directions (schématisées par les flèches (13)).

La charge fluide ou fluide mixte, parce que formé de deux phases (liquide et gaz) remonte dans le réacteur à contre-courant du catalyseur avant d'être évacuée à la partie supérieure du réacteur par l'intermédiaire de moyens de collecte et d'évacuation schématisés par la conduite (11), ayant la forme, par exemple, d'un rateau constitué de tubes collecteurs raccordés à un conduit d'évacuation.

Le fluide mixte injecté par une zone de distribution (7) se dirige vers l'entonnoir ou les entonnoirs qui soutiennent le lit catalytique en formant tout d'abord avant de parvenir à ce ou ces entonnoirs une zone (22) d'accumulation liquide-gazeuse du fluide mixte (amas liquides et gazeux) ; contrairement à l'art antérieur décrit dans US 4571326, il n'y a pas lieu de procéder à ce niveau à une séparation liquide-gaz. Des jambages (24) s'enfoncent dans le niveau supérieur de la zone (22). Sous l'effort des conditions opératoires qui régnent dans le réacteur et sous l'effet des conditions d'admission du fluide mixte, en fond de réacteur le dit fluide mixte s'engouffre et monte à travers les jambages (24) et pénètre dans l'espace affecté au lit catalytique au-dessus du ou des entonnoirs de forme évasée qui soutiennent ce lit catalytique. Une calotte (26) disposée au dessus de chaque jambage fait office de brise jet du fluide ainsi injecté et permet à celui-ci d'être envoyé en plusieurs directions dans la masse catalytique. Chaque calotte, en outre, à pour but de protéger et d'isoler l'embout supérieur de chaque jambage en empêchant le contact direct entre cet embout et les particules catalytiques. La calotte peut avoir toute forme adéquate pour recouvrir convenablement comme un parapluie, l'embout supérieur de chaque jambage (24) et une partie au moins de la partie supérieure de chaque jambage (24). La calotte peut être par exemple une demi-sphère (figure 7E), un tronc de cône (figure 7A), un tronc de pyramide (figure 7C), un prisme (figure 7H), un parallèlèpipède (figure 7G).

Une position particulière de la calotte est la position dans laquelle une des parois de la calotte est sensiblement accolée à la paroi interne du réacteur, comme c'est le cas dans la figure 3 pour une calotte (26). La paroi de la calotte accolée à la paroi interne du réacteur est soit sensiblement plane soit curviligne pour épouser convenablement la forme de paroi interne du réacteur. Pour simplifier la rédaction de cette demande de brevet, on admettra dans la présente invention, qu'une telle paroi de la calotte accolée (tangente) à la paroi interne du réacteur est sensiblement plane ; cette tolérance est assez proche de la réalité en raison du diamètre relativement grand du réacteur en comparaison avec les dimensions de chaque calotte. Comme exemples de calottes dont une paroi est sensiblement accolée à la paroi interne du réacteur, on citera les quart de sphère (figure 7F), les demi troncs de cône (figure 7B), les demi troncs de pyramide (figure 7D), les prismes (figure 7H). Un type d'agencement particulièrement approprié est illustré sur chacune de ces figures, dans les figures 4 et 5. La calotte 26 est constituée par l'association d'un prisme (28) et d'un demi tronc de pyramide (29) qui s'appuient sur la paroi interne du réacteur ; comme indique ci-dessus, selon les possibilités des fabricants de ces types d'appareillage, les parois de ce prisme et de ce demi tronc de pyramide qui s'appuient sur la paroi du réacteur, peuvent être planes ou être curvilignes pour épouser mieux la forme de la paroi du réacteur.

Par ailleurs, pour que le fluide mixte soit bien dispersé dans la masse catalytique, après avoir heurté la base supérieure de la calotte, il est nécessaire que la base de cette calotte, c'est à dire, la frange ne soit pas continue mais soit découpée en majeure partie sur tout son périmètre. Cette frange pourra avoir diverses conformations, par exemple être en forme de dents de scie (27) sur les figures 3 et 7A à 7I ou en forme de créneaux (30) comme sur les figures 4 et 5, en forme de feston ou encore crantée ou encore en forme de sinusoide comme sur la figure 7J. La hauteur de chaque découpe sur la grange (par exemple la hauteur de chaque dent, de chaque créneau ou de chaque cran représente 0,1 à 30% de la hauteur totale de la calotte, de préférence 2 à 25% et plus particulièrement 5 à 15%).

Un agencement selon l'invention en particulier pour des petits réacteurs consiste à disposer des calottes tout le long de la périphérie interne du réacteur. Selon la taille des calottes, on pourrait concevoir par exemple une série de 2 à 30 calottes, de préférence 6 à 15, voire 6 à 12 tangentes accolées ou non entre elles. La figure 6 représente une coupe du réacteur (1) comportant une association d'un jambage (24), ces calottes étant réparties concentriquement autour de l'axe (4) de soutirage du catalyseur en fond de tronc de cône ou de pyramide soutenant ce catalyseur. Pour de grands réacteurs, on peut utiliser en associations les différents types de calottes décrites ci-dessus et réparties dans le réacteur. Par exemple dans un grand réacteur, muni de plusieurs entonnoirs (accolés), on peut disposer 2 à 800 calottes et jambages répartis à la périphérie de ces cônes. (1 à 100 cônes de soutirage).

Ainsi l'appareil selon l'invention (voir figure 3) comporte un réacteur (1) sensiblement vertical et de forme sensiblement allongée et cylindrique.

— des moyens (2) d'introduction de particules solides dans la partie supérieure du reacteur,

— des moyens de soutirage des particules solides dans la partie inférieure du réacteur, constitués essentiellement d'au moins une tubulure (4) sensiblement verticale,

— au moins un entonnoir ou zone évasée (25) dont le sommet est tourné vers le bas et qui soutient les dites particules solides et qui est disposé dans la partie inférieure du réacteur et perforé de façon à permettre le passage de la tubulaire 4 et d'au moins deux tubulure (24) faisant partie d'au moins un dispositif d'injection d'une charge fluide, le dit dispositif étant défini plus loin.

— des moyens (7) et (8) d'introduction de la dite charge fluide constituée d'un liquide et d'un gaz dans l'extrémité inférieure du réacteur, sous le dit entonnoir (25).

— des moyens de soutirage (11) des effluents réactionnels dans la partie supérieure du réacteur (1), l'appareil étant caractérisé par la présence d'un dispositif d'injection d'une charge, le nombre de ce dispositif dans l'appareil étant égal au moins à deux, chaque dispositif comportant :

— un jambage ou tubulaire (24) sensiblement vertical qui perfore le dit entonnoir c'est à dire dont l'extrémité inférieure est située sous le ou les parois du dit entonnoir (et au dessus des moyens (7) et (8) d'introduction de la dite charge) et dont l'extrémité supérieure est située au-dessus du dit entonnoir et relativement à proximité de ce dit entonnoir,

— une calotte (26) qui recouvre l'extrémité supérieure de la tubulure (24), la base inférieure (ou frange) de cette calotte, comportant plusieurs découpes ou une série de découpes agencées sur la majeure partie du périmètre de cette base.

De préférence, pour un réacteur à cône unique, les jambages (24) sont agencés au voisinage de la périphérie de l'entonnoir, à proximité de la paroi interne du réacteur.

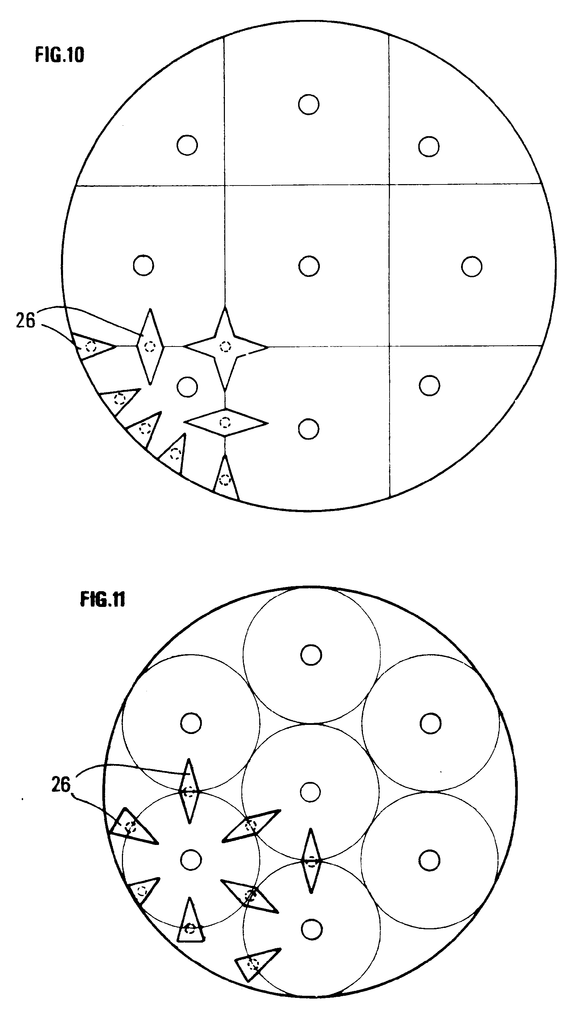

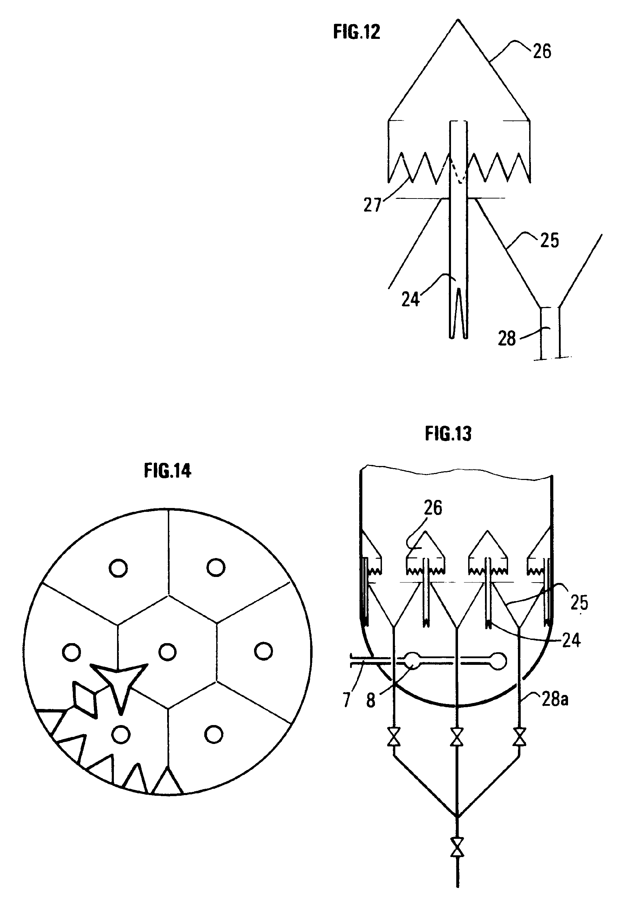

Un agencement particulier concerne plus particulièrement les grands réacteurs pour lesquels on peut utiliser en associations les différents types de calottes décrites ci-dessous (sphères, cônes, pyramides, prismes, parallélipédiques ou tout autre forme) et réparties dans le réacteur. Ainsi un grand réacteur sera muni d'une pluralité d'entonnoirs qui pourront être éventuellement accolés et l'on pourra disposer 7 à 700 calottes (munie chacune d'un jambage ou d'une tubulure) répartis à la périphérie de ces cônes. (3 à 100 entonnoirs de soutirage). Voir figures 10 et 11 par exemple.

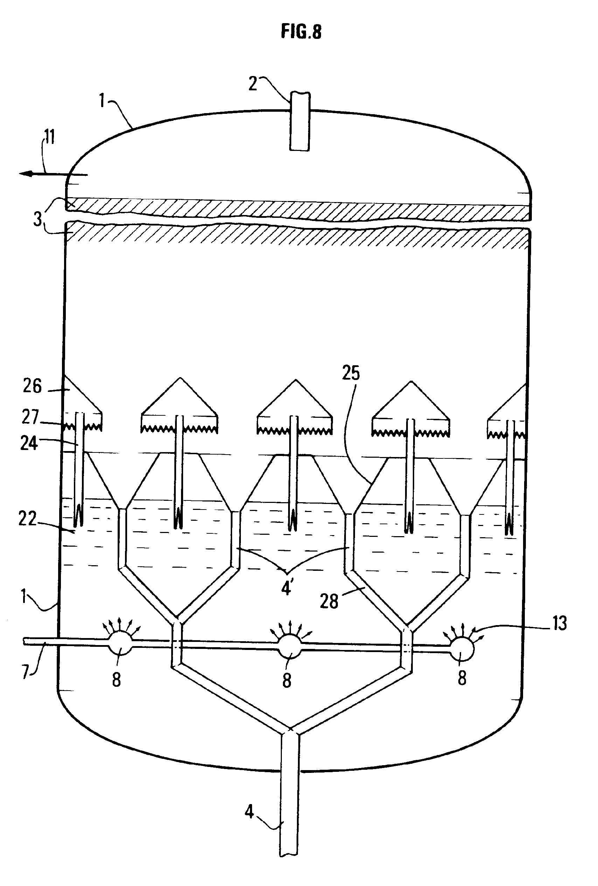

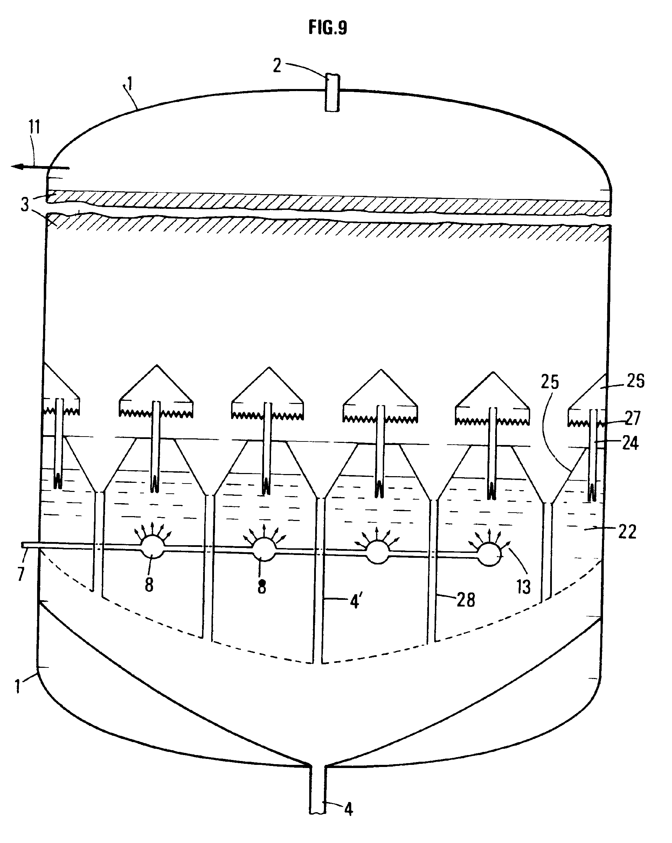

Ainsi l'appareil (voir figures 8 et 9 qui illustrent deux types de dispositifs possibles) comporte un réacteur (1) sensiblement vertical et de forme sensiblement allongée et cylindrique.

— des moyens (2) d'introduction de particules solides dans la partie supérieure du reacteur,

— des moyens de soutirage des particules solides dans la partie inférieure du réacteur, constitués essentiellement d'au moins une tubulure (4) sensiblement verticale,

— une pluralité d'entonnoirs ou zônes évasées (25) dont les sommets sont tournés vers le bas et qui soutiennent les dites particules solides et qui sont disposés dans la partie inférieure du réacteur et perforés de façon à permettre le passage de tubulures 4 et une pluralité de tubulures (24) faisant partie d'au moins un dispositif d'injection d'une charge fluide, le dit dispositif étant défini plus loin.

— des moyens (7) et (8) d'introduction de la dite charge fluide constituée d'un liquide et d'un gaz dans l'extrémité inférieure du réacteur, sous chaque entonnoir (25).

— des moyens de soutirage (11) des effluents réactionnels dans la partie supérieure du réacteur (1), l'appareil comportant en outre une pluralité de dispositif d'injection d'une charge, le nombre de ces dispositifs dans l'appareil étant égal au moins à huit chaque dispositifs comportant :

— au moins un jambage ou tubulure (24) sensiblement vertical qui perfore le dit entonnoir c'est à dire dont l'extrémité inférieure est située sous le ou les parois du dit entonnoir (et au dessus des moyens (7) et (8) d'introduction de la dite charge) et dont l'extrémité supérieure est située au-dessus du dit entonnoir et relativement à proximité de ce dit entonnoir,

— une calotte (26) qui recouvre l'extrémité supérieure de la tubulure (24), la base inférieure (ou frange) de cette calotte, comportant plusieurs découpes ou une série de découpes agencées sur la majeure partie du périmètre de cette base.

Les figures 10 et 11 montrent une vue aérienne du dispositif selon l'invention. Les figures 12, 13 et 14 montrent un agrandissement ou une variante du système selon l'invention. Dans la figure 13, les tubulures d'évacuation du catalyseur ont été schématisées par un simple trait 28-a ou bien de 28 sur les autres figures.

## Revendications

1. Appareil comportant (voir figure 3) :
— un réacteur (1) sensiblement vertical et de forme sensiblement allongée et cylindrique.
— des moyens (2) d'introduction de particules solides dans la partie supérieure du réacteur,
— des moyens de soutirage des particules solides dans la partie inférieure du réacteur, constitués essentiellement d'au moins une tubulure (4) sensiblement verticale.
— au moins un entonnoir ou zone évasée (25) dont le sommet est tourné vers le bas et qui soutient les dites particules solides et qui est disposé dans la partie inférieure du réacteur et perforé de façon à permettre le passage de la tubulure (4) et d'au moins deux tubulures (24) faisant partie d'au moins un dispositif d'injection d'une charge fluide, le dit dispositif étant défini plus loin.
— des moyens (7) et (8) d'introduction de la dite charge fluide constituée d'un liquide et d'un gaz dans l'extrémité inférieure du réacteur, sous le dit entonnoir (25)
— des moyens de soutirage (11) des effluents réactionnels dans la partie supérieure du réacteur (1), l'appareil étant caractérisé par la présence d'au moins deux dispositifs d'injection d'une charge fluide dans l'appareil, chaque dispositif comportant :

— au moins un jambage ou tubulure (24) sensiblement vertical qui perfore le dit entonnoir, c'est à dire dont l'extrémité inférieure est située sous la ou les parois du dit entonnoir (et au dessus des moyens (7) et (8) d'introduction de la dite charge) et dont l'extrémité supérieure est située au dessus du dit entonnoir et relativement à proximité de ce dit entonnoir,

— une calotte (26) qui recouvre l'extrémité supérieure de la tubulure (24), la base inférieure (ou frange) de cette calotte, comportant plusieurs découpes ou une série de découpes agencées sur la majeure partie du périmètre de cette base.

2. Appareil selon la revendication 1 dans lequel la dite calotte à la forme d'un volume choisi dans le groupe constitué par les troncs de cône (fig. 7A), les demi troncs de cône (fig. 7B), les troncs de pyramide (fig. 7C), les demi troncs de pyramide (fig. 7D), les demi sphères (fig. 7E), les quart de sphères (fig. 7F), les parallèlèpipèdes (fig. 7G), les prismes (fig. 7H), les combinaisons de demi troncs de pyramide et de prismes (fig. 7I) et les figures équivalents aux figures précédentes.

3. Appareil selon la revendication 1 dans lequel la hauteur de la découpe représente environ 0.1 à 30% de la hauteur totale de la calotte.

4. Appareil selon la revendication 3 dans lequel la hauteur de la découpe représente 2 à 25% de la hauteur totale de la calotte.

5. Appareil selon la revendication 1 comportant 2 à 800 calottes 1 à 100 cônes de soutirage accolés.

6. Appareil selon la revendication 5 dans lequel au moins 4 calottes sont disposées de façon adjacentes à la paroi interne du réacteur, concentriquement autour du tube (4) de soutirage des particules solides.

7. Appareil selon l'une des revendications 1 à 6 dans lequel la calotte est une juxtaposition d'un quart de pyramide et d'un prisme.

8. Appareil selon l'une des revendications 1 à 7 dans lequel les jambages (24) sont agencés à la périphérie du dit entonnoir et à proximité de la paroi interne du réacteur.

9. Appareil selon la revendication 1 dans lequel le nombre de cas des dispositifs d'injection dans l'appareil est égal au moins à huit.

10. Appareil selon la revendication 9 comportant 7 à 700 calottes et 3 à 100 entonnoirs de soutirage.

## Patentansprüche

1. Vorrichtung umfassend (siehe Figur 3) :
— einen im wesentlichen vertikalen Reaktor (1) im wesentlichen länglicher und zylindrischer Gestalt ;
— Mittel (2) zum Einführen von Feststoffpartikeln in den oberen Teil des Reaktors ;
— Mittel zum Abziehen der Feststoffpartikel im unteren Teil des Reaktors, im wesentlichen bestehend aus wenigstens einem im wesentlichen vertikalen Rohrstutzen (4) ;
— wenigstens eine Trichterausbildung oder aufgeweitete Zone (25), deren Spitze nach unten gerichtet ist und die diese Feststoffpartikel abstützt und die im unteren Teil des Reaktors angeordnet und derart perforiert ist, daß der Rohrstutzen (4) und wenigstens zwei Rohrstutzen (24) durchgeführt werden können, die wenigstens einen Teil eines Einspritzgeräts einer fluiden Charge bilden, wobei das Gerät weiter unten definiert ist ;

— Mittel (7) und (8) zum Einführen dieser fluiden Charge bestehend aus einer Flüssigkeit und einem Gas in den unteren Teil des Reaktors unter dieser Trichterausbildung (25) ;

— Mittel zum Abziehen (11) der Reaktionsabströme im oberen Teil des Reaktors (1), wobei die Vorrichtung sich auszeichnet durch das Vorhandensein wenigstens zweier Einspritzgeräte für eine Fluidcharge in die Vorrichtung, wobei jedes Gerät umfaßt :

— wenigstens eine im wesentlichen vertikale Säulenausbildung oder einen Rohrstutzen (25), der diese Trichterausbildung perforiert, d.h. dessen unteres Ende unter der oder den Wandung(en) dieser Trichterausbildung (und oberhalb der Mittel (7) und (8) zum Einführen dieser Charge) angeordnet ist und dessen oberes Ende oberhalb dieser Trichterausbildung und in relativer Nähe zu dieser Trichterausbildung sich befindet und

— eine Kappe (26), die das obere Ende des Rohrstutzens (24) abdeckt, wobei die untere Basis (oder der Saum) dieser Kappe mehrere Ausschnitte oder eine Reihe von Ausschnitten umfaßt, die über dem größeren Teil des Umfangs dieser Basis ausgebildet sind.

2. Vorrichtung nach Anspruch 1, bei der diese Kappe die Form eines Volumens, gewählt aus der Gruppe hat, die gebildet ist durch die Kegelstümpfe (Fig. 7A), die Kegelhalbstümpfe (Fig. 7B), die Pyramidenstümpfe (Fig. 7C), die Pyramidenhalbstümpfe (Fig. 7D), die Halbkugeln (Fig. 7E), die Viertelkugeln (Fig. 7F), die Parallelepipede (Fig. 7G), die Prismen (Fig. 7H), die Kombinationen von Halbstümpfen von Pyramiden und Prismen (Fig. 7I) und den den vorhergehenden Figuren äquivalenten Figuren.

3. Vorrichtung nach Anspruch 1, bei der die Höhe des Ausschnittes etwa 0,1 bis 30% der Gesamthöhe der Kappe darstellt.

4. Vorrichtung nach Anspruch 3, bei der die Höhe des Ausschnittes 2 bis 25% der Gesamthöhe der Kappe darstellt.

5. Vorrichtung nach Anspruch 1, umfassend 2 bis 800 Kappen, die auf dem Umfang von 1 bis 100 dem Abziehen dienenden aneinander gebauten Kegeln verteilt sind.

6. Vorrichtung nach Anspruch 5, bei der wenigstens vier Kappen benachbart an die Innenwand des Reaktors konzentrisch um das Feststoffpartikel-Abzugsrohr (4) angeordnet sind.

7. Vorrichtung nach einem der Ansprüche 1 bis 6, bei der die Kappe eine Nebeneinanderanordnung einer Viertelpyramide und eines Prismas ist.

8. Vorrichtung nach einem der Ansprüche 1 bis 7, bei der die Rohrstutzen oder säulenartigen Ausbildungen (24) am Umfang dieser Trichterausbildung und benachbart der Innenwandung des Reaktors ausgebildet sind.

9. Vorrichtung nach Anspruch 1, bei der Ziel der Einspritzgeräte ist wenigstens acht.

10. Vorrichtung nach Anspruch 9 umfassend 7 bis 700 Kappen und 3 bis 100 Trichterausbildung Abzugsrohr.

## Claims

1. An apparatus comprising : (see figure 3)

— a substantialoly vertical reactor (1) of elongate and cylindrical shape,

— means (2) for introducing solid particles into the upper part of the reactor,

— means for withdrawing solid particles from the bottom part of the reactor, essentially consisting of at least one substantially vertical pipe (4),

— at least one funnel or flared zone (25) whose apex is turned downwardly, supporting said solid particles, arranged at the lower part of the reactor and perforated for the passage of pipe (4) and of at least two other pipes (24) forming part of at least one fluid charge injection device, said device being defined hereinafter,

— means (7 and 8) for introducing the fluid charge formed of a liquid and a gas at the lower end of the reactor, below said funnel (25),

— means (11) for withdrawing the reaction effluents from the upper part of reactor (1), said apparatus being characterized by the presence of at least two charge injection devices, each device comprising :

— at least one substantially vertical leg or pipe (24) passing through said funnel, i.e whose lower end is located below the wall or walls of said funnel (and above the means 7 and 9 for introducing said charge) and whose upper end is located above said funnel and is relatively close thereto,

— a cap (26) covering the upper end of pipe (24), the lower part (or fringe) of said cap comprising several indentations or series of indentations arranged on the major part of the perimeter thereof.

2. An apparatus according to claim 1, wherein said cap has the shape of a volume selected from the group formed by cone frustums (fig. 7A) cone semi-frustums (fig. 7B), pyramid frustums (fig.7C), pyramid semi-frustums (fig. 7D), semi-spheres (fig. 7E), quarter spheres (fig. 7F), parallelipipeds (fig. 7G), prisms (fig. 7H), combination of pyramid semi-frustums and prisms (fig. 7I) and figures equivalent thereto.

3. An apparatus according to claim 1, wherein the indentation height ranges from 0.1 to 30% of the total height of the cap.

4. An apparatus according to claim 3, wherein the indentation height ranges from 2 to 25% of the total height of the cap.

5. An apparatus according to claim 1, comprising 2 to 800 caps and 1 to 100 joined withdrawal cones.

6. An apparatus according to claim 5, wherein at least 4 caps are arranged adjacent to the internal wall of the reactor, concentrically around tube (4) for withdrawal of solid particles.

7. An apparatus according to one of claims 1 to 6, wherein said cap is formed by juxtaposition of a quarter pyramid and of a prism.

8. An apparatus according to one of claims 1 to 7, wherein legs (24) are arranged at the periphery of said funnel and close to the reactor internal wall.

9. An apparatus according to claim 1 wherein there are at least eight injection devices.

10. An apparatus according to claim 9, comprising 7 to 700 caps and 3 to 100 withdrawing funnels.

FIG.1

FIG.2

FIG.3

FIG.4

FIG.5

FIG.6

FIG.7A

FIG.7B

FIG.7C

FIG.7D

FIG.7E

FIG.7F

FIG.7G

FIG.7H

FIG.7 I

FIG.7J

## FIG.8

# FIG.9

**FIG.10**

26

**FIG.11**

26

**FIG.12**

26

27

24

25

28

**FIG.14**

**FIG.13**

26

25

24

7 8

28a